# EUROPEAN PATENT SPECIFICATION

(11) **EP 1 494 418 B1**
(45) Date of publication and mention of the grant of the patent: **21.03.2018**
(21) Application number: 04012599.9
(22) Date of filing: 27.05.2004
(51) Int. Cl.: G06F 11/14, H04M 1/725, H04L 29/06

(54) **MOBILE COMMUNICATION SYSTEM AND MOBILE TERMINAL DEVICE**
MOBILKOMMUNIKATIONSSYSTEM UND -GERÄT
SYSTÈME ET APPAREIL DE COMMUNICATIONS MOBILES

(30) Priority: 06.06.2003 JP 2003162368
(43) Date of publication of application: 05.01.2005
(60) Divisional application: 12175224.0
(73) Proprietor: Lenovo Innovations Limited (Hong Kong), Quarry Bay, Hong Kong (HK)
(72) Inventor: Suzuki, Junichi, Minato-ku, Tokyo (JP)
(74) Representative: Glawe, Delfs, Moll

(56) References cited:
- WO-A-98/38820
- US-A1- 2003 041 125

## Description

### BACKGROUND OF THE INVENTION

### 1. Field of the Invention

The present invention relates to a mobile communications system and a mobile terminal device, and in particular to a mobile communications system having a mobile terminal device which downloads a program from a server through a network.

### 2. Description of the Related Art

A recent mobile terminal device, especially a portable telephone can incorporate various functions, such as a telephone directory, message recording, transfer, picture taking, and games. Since a portable telephone is integrally incorporated with hardware and software, a user can neither incorporate new functions nor delete unnecessary functions after purchasing the portable telephone. In order to use new functions, a user has to purchase a new portable telephone.

Japanese Patent Laid-open Official Gazette No. 2002-118510 discloses an external operation unit that can make connections with a mobile wireless telephone that is mounted in a car. Although this unit has a library including a set of downloadable functions, this unit is an apparatus other than a telephone.

US 2003/041125 A1 discloses a mobile communication system according to the Preamble of claim 1.

### SUMMARY OF THE INVENTION

A mobile communication system according to the invention is defined in claim 1; the dependent claims are related to further developments of the invention.

According to one aspect of the present invention, a mobile communications systemhas a server that has downloadable programs and a Web page, and a mobile terminal device in which a standardized Application Program Interface is installed. This mobile terminal device can access the Web page through a network to download programs.

According to another aspect of the present invention; the mobile communications systemhas the server that has downloadable programs and the Web page, the mobile terminal device in which the standardized Application Program Interface is installed, and a computer that can access the Web page through the network. In response to instructions from the computer, the server downloads a program designated by the mobile terminal device.

Furthermore, according to yet another aspect of the present invention, the mobile terminal device can access the Web page to download programs, and the standardized Application Program Interface is installed in the mobile terminal device.

According to the above mentioned invention, functions installed in the mobile terminal device can be changed easily, and can be updated. The mobile terminal device can easily cope with a freeze on a function.

### BRIEF DESCRIPTION OF THE DRAWINGS

The above-mentioned and other objects, features and advantages of the present invention will become apparent from the following detailed description when taken with the accompanying drawings in which:
FIG.1 shows an example of a mobile communications system according to the present invention.
FIG. 2 is a block diagram of an example of a mobile terminal device.
FIG. 3 is a block diagram of an example of a function management means.
FIG. 4 is a block diagram of an example of a server.
FIG. 5 is a flow chart of an example of an operation of the mobile communications system according to the present invention.
FIG. 6 is a flow chart of another example of the operation of the mobile communications system according to the present invention.
FIG. 7 is a block diagram of another example of the function management means.
FIG. 8 shows another example of the mobile communications system according to the present invention.

### DETAILED DESCRIPTION OF THE PREFERRED EMBODIMENTS

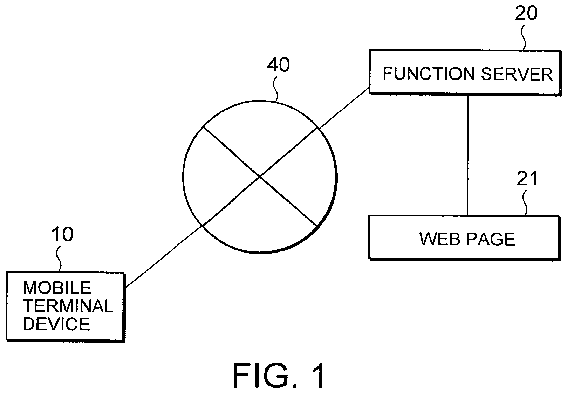

Hereinafter, preferable embodiments of a mobile communications system and a mobile terminal device according to the present invention will be described. As shown in FIG. 1, the mobile communications system according to an embodiment of the present invention includes a mobile terminal device 10, a function server 20, and a network 40. The function server 20 has a Web page 21 (HTML documents contained in a WWW (worldwide Web) server) and software (hereinafter, referred to as "function programs") which performs various functions on the mobile terminal device 10. The mobile terminal device 10 can make connections with the network 40. Furthermore, the mobile terminal device 10 can access the function server 20 to download various function programs from the Web page 21.

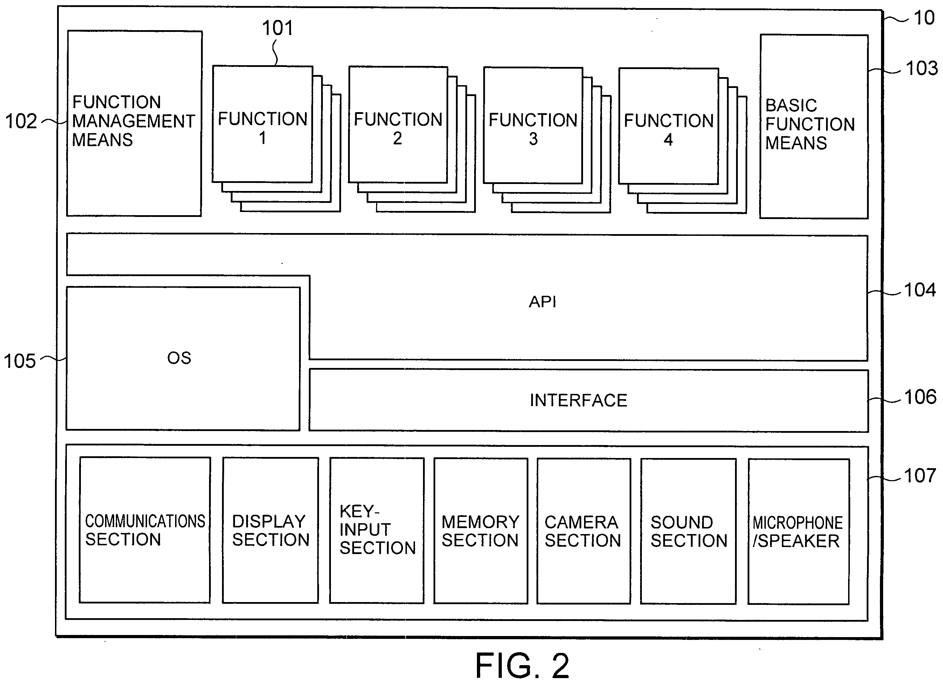

As shown in FIG. 2, the mobile terminal device 10 according to the embodiment includes various kinds of hardware 107, interface 106, operating systems (OSs) 105, and application program interface (API) 104. The hardware 107 includes, for example, a communications section, a display section, a key-input section, a memory section, a camera section, a sound section, a microphone and a speaker. Furthermore, the mobile terminal device 10 includes a basic function means 103 that controls communications, function programs 101, andafunctionmanagement means 102 that manages the function programs 101. The function programs 101 may be installed in the mobile terminal device 10 in advance. In addition, the mobile terminal device 10 can download the function programs 101 therein from the Web page, and can also delete function programs that have been already installed. The API 104 functions as interface with subordinate modules.

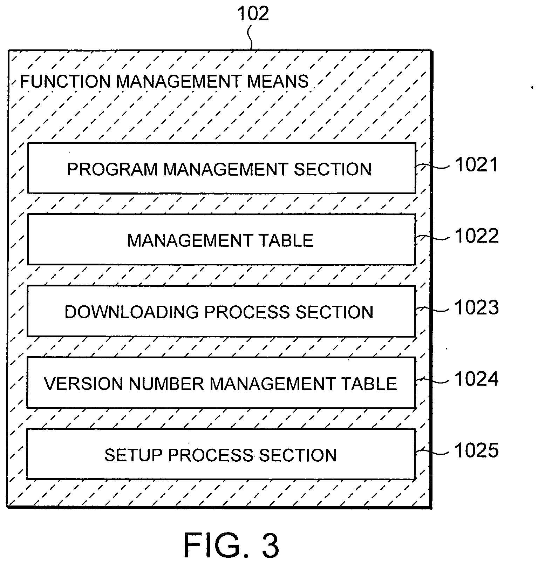

FIG. 3 shows components of the function management means 102 according to the embodiment. The function management means 102 includes a program management section 1021, a management table 1022, a downloading process section 1023, a version number management table 1024, and a setup process section 1025. The management table 1022 registers function programs. The downloading process section 1023 downloads and overwrites under the control by the program management section 1021. The program management section 1021 transmits to the server 20 a request to download function programs that the user has chosen. Subsequently, the program management section 1021 identifies the chosen function programs and the version numbers thereof. Next, the program management section 1021 judges, with the reference to the management table 1022, whether the chosen function programs are the same as function programs that have been already installed, and whether the version numbers of the chosen programs is equal to those of the latest versions of the same programs that have not been downloaded yet. The program management section 1021 controls the downloading process section 1023, and causes the downloading process section to start downloading new or updated versions of the function programs. With regard to function programs that have already been installed, the downloading is cancelled. The version number management table 1024 records and manages the version numbers of installed function programs. The setup process section 1025 executes installed function programs.

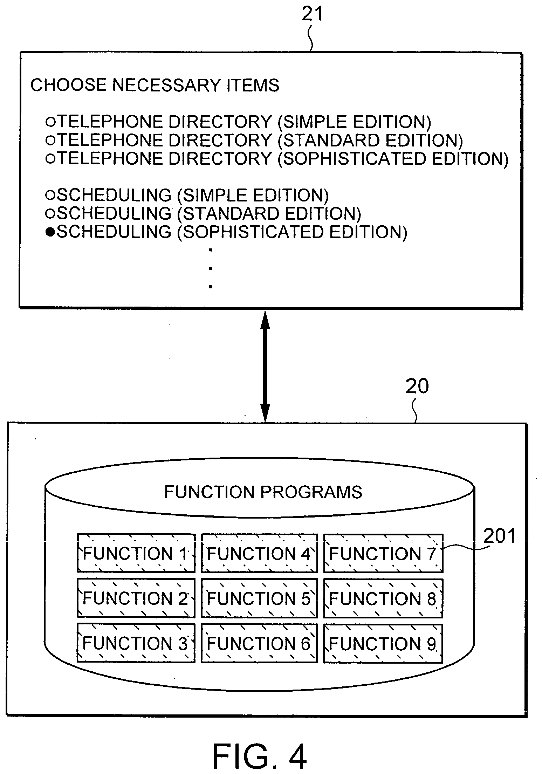

FIG. 4 shows an example of an embodiment relating the Web page 21 and the Server 20. Themobile terminal device 10 accesses the server 20, displays the Web page 21 on the display section of the mobile terminal device 10, and chooses function programs. FIG. 4 illustrates a telephone directory function, a scheduling function, ranging from a simple edition to a sophisticated edition. The server 20 stores a plurality of downloadable function programs 201 (functions 1 to 9).

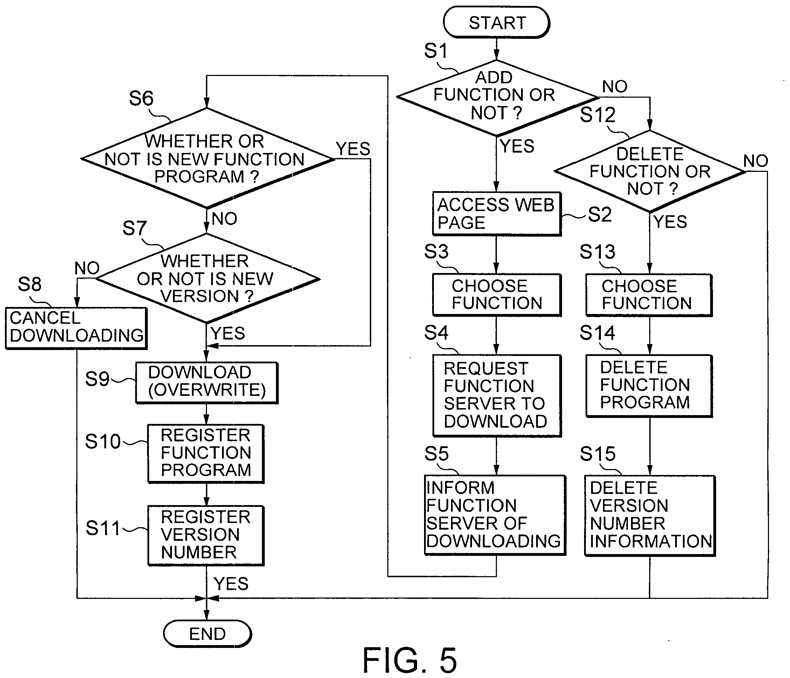

FIG. 5 shows an operation of a mobile communications system in the embodiment. A user of the mobile terminal device 10 wishes to download a new function program (S1), and accesses the Web page 21 of the function server 20 (S2). When the mobile terminal device accesses the Web page, the display section of the mobile terminal device 10 displays a selection screen as shown in FIG. 4. The user designates a desired function as an addition from the key-input section (S3). If the user designates, for example, a scheduling function (a sophisticated edition thereof) and operates a process of determination, the program management section 1021 transmits a request to download the program of the designated function to the server 20 (S4). The server 20 receives the request to download, chooses the designated program, and informs the mobile terminal device 10 of information of the commencement of the downloading that includes information of the designated function program (S5). Based on the information of the commencement of the downloading, the program management section 1021 of the mobile terminal device 10 judges whether or not the function of the function program intended to be downloaded is a new function, with reference to the management table 1022 (S6). If the function of the function program intended to be downloaded is a function whose program has already been installed, the mobile terminal device 10 additionally checks with the version number management table 1024 on the version number of the function program intended to be downloaded (S7). If the version number of the function program that has already been installed is equal to that of the function program intended to be downloaded, the downloading is canceled (S8). If the version number of the function program intended to be downloaded is larger than that of the function program that has already been installed, the program management section 1021 controls the downloading process section 1023, and downloads after deleting the existing function program, or overwrites the existing function program (S9). If the function program intended to be downloaded has not been installed yet (in the case of Yes in S6), the program management section 1021 downloads the function program. When the downloading is completed, the program management section 1021 registers the function program with the management table 1022 (S10). In addition, the program management section 1021 registers information of the version number of the function program and the like with the version number management section 1024 (S11). When the user intends to delete function programs (S12), the user causes the display section to display a list of function programs and the like, and chooses the programs that the user intends to delete (S13). The program management section 1021 controls the downloading process section 1023, and eliminates the intended function programs, and then deletes the related registrations from the management table 1022 (S14). Additionally, information of the version numbers of the eliminated function programs is deleted from the version number management table 1024 (S15).

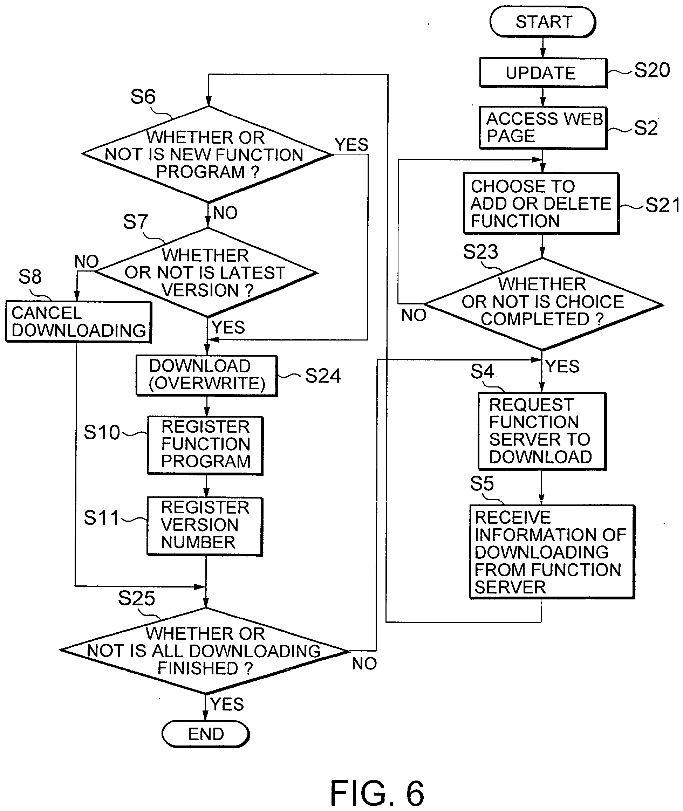

FIG. 6 shows an operation of a mobile communications system according to another embodiment of the present invention. When the user intends to update a plurality of functionprograms (S20), the user accesses the Web page 21 (S2). The user chooses to add and/or delete function programs (S21 and S23) a plurality of times. The user can also choose to update a plurality of function programs at one time. Subsequent processes from S4 to S8 are the same as those of FIG. 5. Next, the latest version of a first of the function programs to be updated is written over the previous version of the same function program in the mobile terminal device 10, or the latest version is downloaded after the previous version is deleted (S24). Then, the latest version of the program is registered (S10), and the version number of the program is registered (S11). In addition, similar processes are executed for the other function programs to be updated. In an example shown in FIG. 6, the server 20 can display function programs, which have been updated from time to time, as items to be updated for choice in the Web page. When the user chooses desired items to be updated, the user can download the updated versions of the plurality of desired function programs one after another.

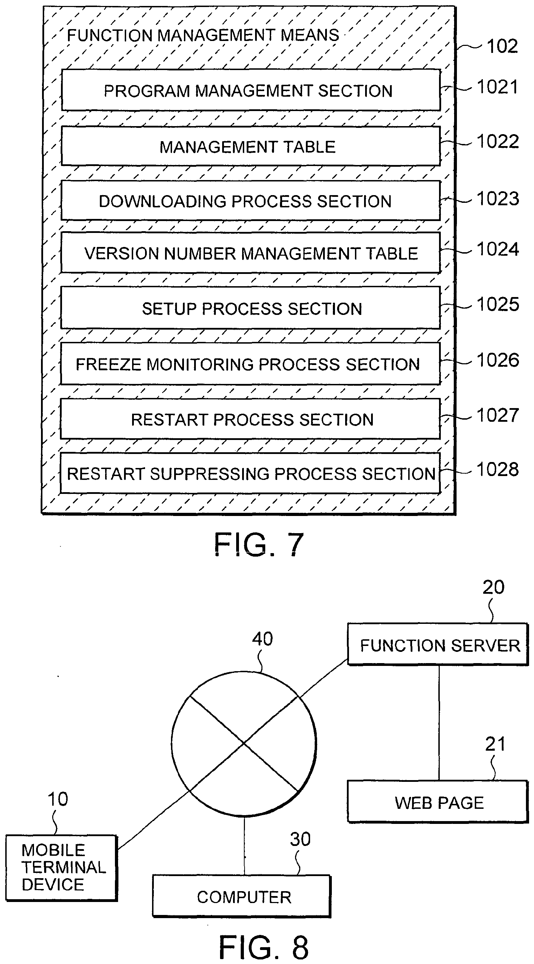

The mobile terminal device according to the embodiment of the present invention can install the standardized API therein, and accesses the server to download various function programs therein. However, when the mobile terminal device downloads programs therein through the network, it is likely that the mobile terminal device takes in programs laden with bugs. In such a case, it is highly likely that function programs freeze up in the course of their operation. FIG. 7 shows the function management means 102 of the mobile terminal device related to an example of capability of coping with a freeze. The function management means 102 shown in FIG. 7 includes a freeze monitoring process section 1026 that monitors a freeze on functions, a restart process section 1027 that restarts functions, and a setup suppressing process section 1028 that suppresses the setting up of the functions, in addition to components shown in FIG. 3. The freeze monitoring process section 1026 monitors the occurrence of a freeze while checking on the state of an operation of a program in a setup mode periodically. Based on the control of the freeze monitoring process section 1026, the restart process section 1027 forcibly shuts down a function program in a. setup mode, if in a state of freezing, and restarts the function program. The restart suppressing process section 1028 detects the frequency of the occurrence of a freeze in a prescribed length of time, and, then forcibly shuts down the process of the restart process section 1027, and prohibits a restart, depending on the frequency of the occurrence of a freeze. The restart process section 1027, too, can restart a function program in operation that freezes, depending on the frequency of the occurrence of a freeze.

As shown in FIG. 8, the mobile terminal communications system according to the embodiment of the present invention includes a computer 30 that make connections with the network. The computer 30 accesses the server 20 through the network 40, and requests various function programs to be downloaded to the mobile terminal device 10. The computer 30 transmits to the server 20 information for identifying function programs and ID information regarding the telephone number of the mobile terminal device 10 and the like. Based on the received information, the server 20 accesses the mobile terminal device 10, and downloads function programs designated by the computer 30 to the mobile terminal device 10. The computer 30 represents, for example, a small home computer.

It is noted that the above-mentioned mobile communications system can include a security function that rejects an unauthorized access.

The mobile communications system enables the mobile terminal device to download software (function programs) therein easily through the network.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the scope of the following claims.

## Claims

1. A mobile communication system, comprising:
a mobile terminal device (10) which includes a standardized application program interface (104) as interface with subordinate modules and a function management means (102) for managing function programs of the mobile device;
a server (20) including a web page and downloadable function programs for adding new functions to the mobile device (10); and
a computer (30) that can access a web page (21) through a network and requests at least one function program to be downloaded to the mobile device (10) by transmitting the server (20) information for identifying the function program and ID information of the mobile device (10), and wherein the server downloads the function program designated by the information for identifying the program transmitted from the computer (30) to the mobile terminal device (10) designated by the ID information of the mobile device transmitted from the computer; **characterized in that**
the function management (102) means has capability of coping with a freeze of the function program downloaded from the server in a setup mode of the function.

2. The mobile communication system according to claim 1, wherein the function management means includes:
a freeze monitoring means (1026) that monitors occurrence of the freeze while checking on a state of operation of the function program downloaded from the server in the setup mode;
a restart processing means (1027) that forcibly shuts down the function program in the setup mode and restarts the function program if the freeze has detected by the freeze monitoring means; and
a setup suppress processing means (1025) that suppresses the setting up of the function depending on a frequency of occurrences of the freeze in a prescribed length of time having been detected.

3. The mobile communication system according to claim 1 or claim 2, wherein the function management means (102) has further capability of managing downloading of the function program with referring to information of commencement of downloading that is informed from the server prior to commencement of downloading the designated function program.

4. The mobile communication system according to claim 3, wherein the function management means includes
a program management means (1021) that manages the function programs installed in the mobile device with respective version numbers, determines whether downloads the function program or not based on the information of commencement of downloading informed from the server, and downloads the function program only an uninstalled version.

## Patentansprüche

1. Mobil-Kommunikationssystem mit:
einer Mobil-Anschlussvorrichtung (10) mit einer standardisierten Anwendungsprogrammschnittstelle (104) als Schnittstelle zu untergeordneten Modulen und einer Funktions-Verwaltungseinrichtung (102) zur Verwaltung von Funktionsprogrammen der Mobilvorrichtung,
einem Server (20) mit einer Webseite und herunterladbaren Funktionsprogrammen zur Zufügung von neuen Funktionen zu der Mobilvorrichtung (10) und
einem Computer (30), der auf eine Webseite (21) über ein Netzwerk zugreifen kann und anfordern kann, dass durch Übertragung an den Server (20) von Informationen zur Identifizierung des Funktionsprogramms und ID-Informationen der Mobilvorrichtung (10) mindestens ein Funktionsprogramm auf die Mobilvorrichtung (10) heruntergeladen wird, wobei der Server das Funktionsprogramm herunterlädt, das durch die Informationen zur Identifizierung des Programms bezeichnet ist, die von dem Computer (30) an die Mobil-Anschlussvorrichtung (10) übertragen werden, die durch die ID-Informationen der Mobilvorrichtung bezeichnet ist, die von dem Computer übertragen wird, **dadurch gekennzeichnet, dass**
die Funktions-Verwaltungseinrichtung (102) eine Fähigkeit zur Bewältigung eines Stillstandes des Funktionsprogramms, das von dem Server heruntergeladen wird, in einem Einrichtungsmodus der Funktion aufweist.

2. Mobil-Kommunikationssystem nach Anspruch 1, wobei die Funktions-Verwaltungseinrichtung aufweist:
eine Stillstand-Überwachungseinrichtung (1026), die das Auftreten des Stillstandes überwacht, während ein Betriebszustand des Funktionsprogramms, das von dem Server heruntergeladen wurde, in dem Einrichtungsmodus überprüft wird,
eine Neustart-Verarbeitungseinrichtung (1027), die zwangsweise das Funktionsprogramm in dem Einrichtungsmodus unterbricht und das Funktionsprogramm neu startet, falls der Stillstand durch die Stillstand-Überwachungseinrichtung erfasst wird, und
eine Einrichtung-Unterbrechungs-Verarbeitungseinrichtung (1025), die das Einrichten der Funktion abhängig davon unterdrückt, dass eine Frequenz des Auftretens des Stillstandes in einer vorgegebenen Zeitspanne erfasst wurde.

3. Mobil-Kommunikationssystem nach Anspruch 1 oder 2, wobei die Funktions-Verwaltungseinrichtung (102) ferner eine Fähigkeit der Verwaltung des Herunterladens des Funktionsprogramms mit Bezug auf Informationen über den Beginn des Herunterladens aufweist, die von dem Server vor Beginn des Herunterladens des bezeichneten Funktionsprogramms mitgeteilt wird.

4. Mobil-Kommunikationssystem nach Anspruch 3, wobei die Funktions-Verwaltungseinrichtung aufweist eine Programm-Verwaltungseinrichtung (1021), die die Funktionsprogramme, die in der Mobilvorrichtung installiert sind, mit Bezug auf die Versionsnummer verwaltet, basierend auf den Informationen hinsichtlich des Beginns des Herunterladens, die von dem Server mitgeteilt wurden, bestimmt, ob das Funktionsprogramm heruntergeladen wird oder nicht, und das Funktionsprogramm nur in einer nicht installierten Version herunterlädt.

## Revendications

1. Système de communication mobile, comprenant :
un dispositif de terminal mobile (10) qui comprend une interface de programme d'application standardisée (104) comme interface ayant des modules subordonnés, et un moyen de gestion de fonction (102) permettant de gérer des programmes de fonction du dispositif mobile ;
un serveur (20) comprenant une page Web et des programmes de fonctions pouvant être téléchargés permettant d'ajouter de nouvelles fonctions au dispositif mobile (10) ; et
un ordinateur (30) qui peut accéder à une page Web (21) par le biais d'un réseau et demande qu'au moins un programme de fonction soit téléchargé sur le dispositif mobile (10) en transmettant au serveur (20) des informations pour identifier le programme de fonction et des informations d'identifiant du dispositif mobile (10), et dans lequel le serveur télécharge le programme de fonction désigné par les informations pour identifier le programme transmis à partir de l'ordinateur (30) au dispositif de terminal mobile (10) désigné par les informations d'identifiant du dispositif mobile transmises à partir de l'ordinateur ;
**caractérisé en ce que**
le moyen de gestion de fonction (102) a la capacité de copier grâce à un gel du programme de fonction téléchargé à partir du serveur dans un mode de configuration de la fonction.

2. Système de communication mobile selon la revendication 1, dans lequel le moyen de gestion de fonction comprend :
un moyen de surveillance de gel (1026) qui surveille l'occurrence du gel tout en vérifiant un état de fonctionnement du programme de fonction téléchargé à partir du serveur dans le mode de configuration ;
un moyen de traitement de redémarrage (1027) qui ferme de force le programme de fonction dans le mode de configuration et redémarre le programme de fonction si le gel est détecté grâce au moyen de surveillance de gel ; et
un moyen de traitement de suppression de configuration (1025) qui supprime la configuration de la fonction selon une fréquence d'occurrences du gel dans une longueur de temps prescrite qui a été détectée.

3. Système de communication mobile selon la revendication 1 ou la revendication 2, dans lequel le moyen de gestion de fonction (102) a la capacité supplémentaire de gérer le téléchargement du programme de fonction en se référant aux informations de commencement du téléchargement dont l'information est reçue du serveur avant le commencement du téléchargement du programme de fonction désigné.

4. Système de communication mobile selon la revendication 3, dans lequel le moyen de gestion de fonction comprend
un moyen de gestion de programme (1021) qui gère les programmes de fonctions installés dans le dispositif mobile par rapport aux numéros de versions, détermine le fait de savoir si télécharger le programme de fonction ou pas est basé sur les informations de commencement de téléchargement dont l'information vient du serveur, et télécharge le programme de fonction seulement sur une version non installée.
